Europäisches Patentamt

European Patent Office

Office européen des brevets

(11) Veröffentlichungsnummer: **0 282 008**

**A2**

## (12) EUROPÄISCHE PATENTANMELDUNG

(21) Anmeldenummer: 88103628.9

(51) Int. Cl.⁴: **B60B 5/02**

(22) Anmeldetag: 08.03.88

(30) Priorität: 10.03.87 BG 78807/87

(43) Veröffentlichungstag der Anmeldung:
14.09.88 Patentblatt 88/37

(84) Benannte Vertragsstaaten:
DE ES FR GB IT SE

(71) Anmelder: TECHNOLOGITCHEN CENTAR
"IPOMA"
P.O.Box 1382
BG-1000 Sofia(BG)

(72) Erfinder: Kostov, Georgi, Dipl.-Ing.
13, Gorski Patnik
Sofia(BG)
Erfinder: Gargov, Bogoya Georgiev, Dipl.-Ing.
Komplex Darvenitza Block 42-A
Sofia(BG)
Erfinder: Gitchev, Chavdar Lyubomirov,
Dipl.-Ing.
1, Aboba Street
Sofia(BG)
Erfinder: Kostova, Sophya Georgieva
13, Gorski Patnik Street
Sofia(BG)

(74) Vertreter: Finck, Dieter et al
Patentanwälte v. Füner, Ebbinghaus, Finck
Mariahilfplatz 2 & 3
D-8000 München 90(DE)

(54) **Fahrzeugrad aus Polymerwerkstoff.**

(57) Das Fahrzeugrad aus technischem Kunststoff weist eine Felge (1) mit einem in ihr ausgebildeten Reifenbett (2) auf, die mit einer Radscheibe (3) mit Löchern (4) für Befestigungselemente (9) verbunden ist. Zwischen der Radscheibe (3) und einer Fahrzeugnabe (5) ist eine wärmeisolierende Platte (8) eingelegt. Um die Reduzierung des Anziehmoments der Befestigungselemente (9) durch betriebsbedingte Ewärmung des Fahrzeugrads so gering wie möglich zu halten, sind im Bereich eines jeden Loches (4) axial gleichmäßig angeordnete Stifte (6) eingelegt, die aus Stahl mit hoher Elastizitätsgrenze hergestellt sind, und deren Stirnflächen in Berührung mit Stützplatten (7) stehen, die beiderseits der Radscheibe (3) angeordnet sind. Der lineare Ausdehnungskoeffizient der Stifte (6) und der Befestigungselemente (9) ist dabei gleich.

Fig. 1

# FAHRZEUGRAD AUS POLYMERWERKSTOFF

Die Erfindung betrifft ein Fahrzeugrad aus technischem Kunststoff bzw. Polymerwerkstoff, welches eine Felge mit einem in ihr ausgebildeten Reifenbett, eine mit der Felge verbundene Radscheibe mit Löchern für Befestigungselemente und eine zwischen der Radscheibe und einer Fahrzeugnabe eingesetzte wärmeisolierende Platte aufweist.

Derartige Fahrzeugräder werden vor allem im Automobilbau verwendet.

Aus der US-A-3 811 737 ist ein Fahrzeugrad aus Kunststoff bekannt, das eine Felge mit einem in ihr ausgebildeten Reifenbett aufweist. Die Felge ist mit einer Radscheibe verbunden, in welcher Löcher für Bolzen zum Befestigen an der Fahrzeugnabe eines Kraftfahrzeugs vorgesehen sind. Im Bereich dieser Löcher sind Hartmetalleinsätze eingelegt. Bei Belastung und Erwärmung des Fahrzeugrads wird der Kunststoff im Bereich der Löcher für die Bolzen zerquetscht, wodurch das Festziehmoment in den Bolzen abnimmt.

Aus der DE-A-32 24 929 ist ferner ein Fahrzeugrad aus glasfaserverstärktem Kunststoff bekannt, das aus einer Felge besteht, die mit einer Radscheibe verbunden ist, in welche Löcher für Bolzen zum Befestigen des Fahrzeugrads an die Fahrzeugnabe eines Kraftfahrzeugs vorgesehen sind. Für das Herabsetzen der Erwärmung der Radscheibe ist zwischen der Radscheibe und der Fahrzeugnabe eine wärmeisolierende Platte eingelegt. Trotz der wärmeisolierenden Platte erfolgt ein Kriechen des Werkstoffs im Bereich der Löcher für die Bolzen, wodurch das Festziehmoment reduziert wird.

Bei einem ähnlich gebauten, aus der GB-A-20 69 422 bekannten Fahrzeugrad aus glasfaserverstärktem Polymerwerkstoff mit einer Felge und Radscheibe ist zwischen der Radscheibe und der Fahrzeugnabe eine wärmeisolierende Platte mit radial angeordneten Rippen und Lüftungskanälen eingelegt. Unterhalb der Befestigungselemente, welche die Radscheibe mit der Fahrzeugnabe verbinden, sind wärmeisolierende Ringe angebracht. Der schädliche Einfluß des Kriechens des Werkstoffs im Bereich der Befestigungselemente kann auch bei diesem komplizierten Aufbau auch nicht vermieden werden, so daß das Festziehmoment ebenfalls verringert wird.

Der Erfindung liegt die Aufgabe zugrunde, das Fahrzeugrad der gattungsgemäßen Art so auszubilden, daß die Verringerung des Festziehmoments in den Befestigungselementen während des Betriebs bei Belastung und Erwärmung in zulässigen Grenzen bleibt.

Diese Aufgabe wird bei dem Fahrzeugrad der gattungsgemäßen Art dadurch gelöst, daß im Bereich eines jeden Lochs für das Befestigungselement axial gleichmäßig angeordnete Stifte aus Stahl mit hoher Elastizitätsgrenze eingesetzt sind, deren Stirnflächen in Berührung mit Stützplatten stehen, die auf beiden Seiten der Radscheibe angeordnet sind, wobei die lineare Wärmeausdehnungszahl der Stifte und der Befestigungselemente gleich groß ist.

Bei dem erfindungsgemäßen Fahrzeugrad ist der schädliche Einfluß des Kriechens des Werkstoffs in den Bereichen der Löcher für die Befestigungselemente herabgesetzt, wodurch das anfängliche Festziehmoment der Befestigungselemente während des Betriebs bei Belastung und Erwärmung in zulässigen Grenzen abnimmt. Dies führt zu einer Erhöhung der Sicherheit und zu einem gefahrlosen Betrieb des Kraftfahrzeugs.

Anhand von Zeichnungen wird ein Ausführungsbeispiel der Erfindung näher erläutert. Es zeigt:

Fig. 1 das Fahrzeugrad im Längsschnitt angebracht an einer Fahrzeugnabe und

Fig. 2 den Schnitt A-A von Fig. 1.

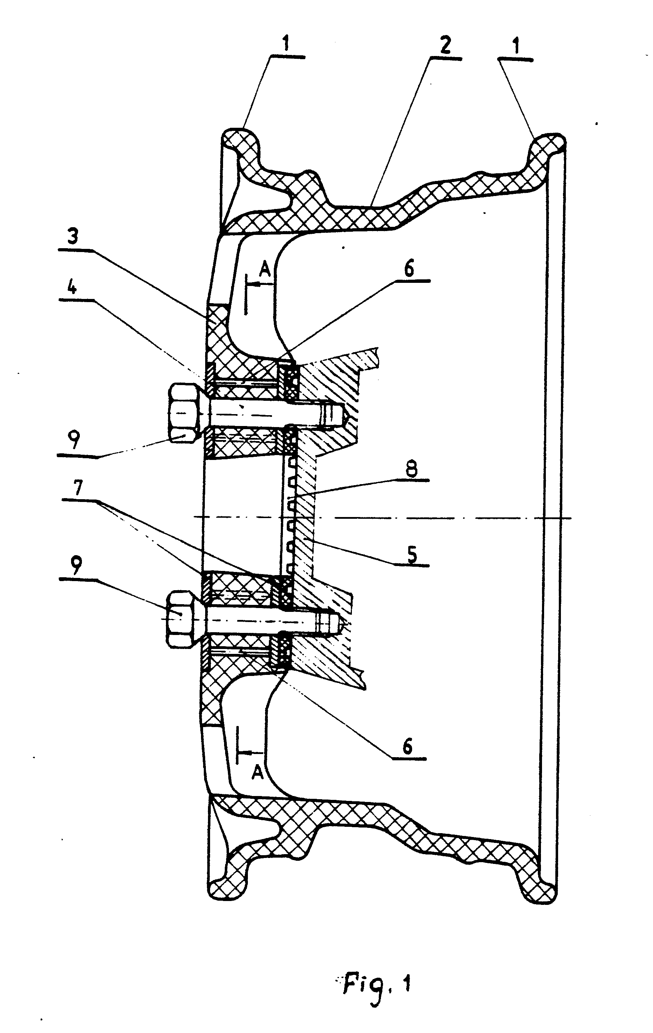

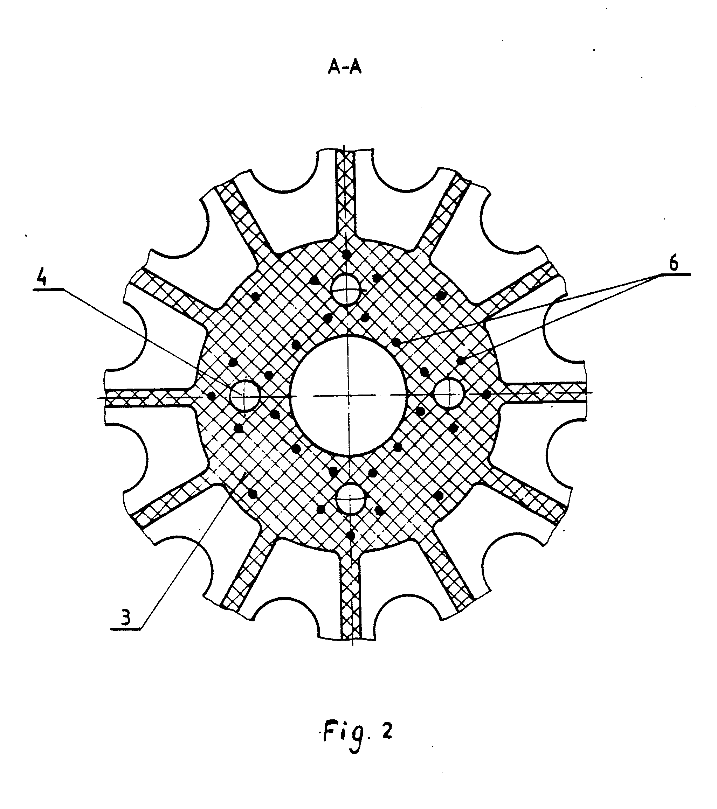

Das in Fig. 1 und 2 gezeigte Fahrzeugrad besteht aus einer Felge 1 mit einem in ihr ausgebildeten Reifenbett 2. Die Felge 1 ist mit einer Radscheibe 3 verbunden, welche Löcher 4 für als Befestigungselemente dienende Bolzen 9 aufweist. Zwischen der Radscheibe 3 und einer Fahrzeugnabe 5 ist eine wärmeisolierende Platte 8 eingelegt. Im Bereich eines jeden Loches 4 für einen Bolzen 9 sind axial gleichmäßig angeordnete Stifte 6 eingelegt, die aus Stahl mit hoher Elastizitätsgrenze hergestellt sind. Die Stirnflächen der Stifte 6 stehen in Berührung mit Stützplatten 7, die beiderseits der Scheibe 3 angeordnet sind. Die linearen Wärmeausdehnungszahlen der Stifte 6 und der Bolzen 9 sind gleich.

Während des Betriebs des Kraftfahrzeugs, wenn die Fahrzeugräder bei intensiver Benutzung des Bremssystems belastet werden und sich erwärmen, wird infolge des axialen Drucks der Bolzen 9 das Kriechen des Kunststoffs bzw. Polymerwerkstoffs erhöht, was zur Abnahme des anfänglichen Festziehmoments führt. Das Kriechen tritt in den Bereichen der Bolzen 9 und zwischen den Stützplatten 7 auf, die mit den Stiften 6 in Berührung stehen. Um den schädlichen Einfluß des Kriechens des Werkstoffs in den Bereichen um die Bolzen 9 und zwischen den Stützplatten 7, die beiderseits der Scheibe 3 angeordnet sind, zu vermeiden, werden die Anzahl der in diesen Bereichen axial angeordneten Stifte 6, ihr Durchmesser und ihr Werkstoff so bestimmt, daß die Gesamtverformung der Stifte 6 unter der Einwirkung des axialen Drucks der Bolzen 9 im elastischen Bereich der Verformung des Werkstoffs der Stifte 6 liegt und außerdem genauso groß ist wie die Verformung des Werkstoffs in diesen Bereichen.

Anhand von Beispielen wird die Erfindung weiter erläutert.

### Beispiel 1

Ein Fahrzeugrad aus mit 30 % Glasfasern verstärktem Polyamid 6 ist bei Verwendung von Stiften 6 und Stützplatten 7 aus Stahl 65G und einer wärmeisolierenden Platte 8 aus Polyaminobismaleimid verstärkt mit 65 % Glasfasern, unter Laborbedingungen auf eine Fahrzeugnabe 5 montiert, wobei die vier Bolzen 9 mit einem anfänglichen Festziehmoment von 90 Nm angezogen sind. Die Fahrzeugnabe 5 mit dem an ihr befestigten Fahrzeugrad wird in statischem Zustand elektrisch erwärmt. Wenn eine Temperatur von 250° C erreicht ist, wird sie automatisch während zwei Stunden bei einer Genauigkeit von ± 10° C aufrecht erhalten. Danach wird die Wärmezufuhr unterbrochen. Das System aus Fahrzeugrad und Fahrzeugnabe 5 kann sich ohne Anblasen und Belüftung frei bis 25° C abkühlen. Dieser Zyklus wird 10 mal wiederholt.

Nach der Beendigung des ersten Zyklus, der nicht in die Prüfung einbezogen ist, und nach dem Abkühlen der Fahrzeugnabe 5, erfolgt eine Kontrolle und erforderlichenfalls eine Wiederherstellung des anfänglichen Festziehmoments in den Bolzen 9 bis zum anfänglichen Wert, um die Bolzen 9, die Stützplatten 7, die Stifte 6, die Radscheibe 3 und die wärmeisolierende Platte 8 einander anzupassen.

Die in den Bolzen 9 gemessenen Festziehmomente nach Beendigung der Prüfung, gemessen in Anziehrichtung, liegen in den Grenzen von 83 Nm bis 79 Nm, d.h. das anfängliche Festziehmoment der Bolzen 9 hat um 8 bis 12 % abgenommen, was in den zulässigen Grenzen für einen gefahrlosen Betrieb der Fahrzeugräder aus technischem Kunststoff liegt.

### Beispiel 2

Ein Fahrzeugrad aus mit 43 % und 50 % Glasfasern verstärkten Polyamid 6.6 wird bei den Versuchsbedingungen von Beispiel 1 geprüft.

Die gemessenen Festziehmomente in den Bolzen 9 nach der Beendigung der Prüfung der Fahrzeugräder aus beiden Werkstoffen, gemessen in Anziehrichtung, liegen in den Grenzen von 85 bis 83 Nm, d.h. das Festziehmoment ist um 5 bis 8 % verringert.

### Beispiel 3

Zwei Fahrzeugräder aus mit 30 % Glasfasern verstärktem Polyamid 6 werden zur Prüfung gemäß Beispiel 1 auf die beiden vorderen Fahrzeugnaben eines Pkw's (Marke Lada) montiert. Die vier Bolzen 9 werden mit einem anfänglichen Festziehmoment 90 Nm angezogen. Zwischen der Fahrzeugnabe 5 und der wärmeisolierenden Platte 8 des Fahrzeugrades sind zur Messung der Oberflächentemperatur, die sich durch intensives Bremsen erhöht, Draht-Thermopaare angeordnet.

Der Pkw ist mit einer maximalen Last von 400 kg belastet. Er wird über 30 km ebene Autobahn gefahren. Dabei werden 40 Bremsungen von einer Geschwindigkeit von 120 km/h auf 40 km/h bei einem Verzögerungsgrad, also einer negativen Beschleunigung von etwa 6 m/s$^2$ und Umgebungstemperatur von 19° C durchgeführt.

Die maximalen Temperaturen werden nach den ersten 18 Bremsungen stabil und erreichen einen Wert von 185 bis 190° C. Der Wagen wird nach der Durchführung von 40 Bremsungen auf einem Parkplatz abgestellt, damit sich die erwärmten Fahrzeugnaben 5 in statischer Stellung abkühlen können. Wenn die Fahrzeugnaben 5 eine Temperatur von 25° C erreicht haben, wird das Festziehmoment in den Bolzen 9 der beiden vorderen Fahrzeugräder in Anziehrichtung gemessen. Das Festziehmoment beträgt im Durchschnitt 82 Nm, d.h. es hat um 9 % abgenommen.

### Ansprüche

Fahrzeugrad aus Polymerwerkstoff, welches eine Felge (1) mit einem in ihr ausgebildeten Reifenbett (2), eine mit der Felge (1) verbundene Radscheibe (3) mit Löchern (4) für Befestigungselemente (9) und eine zwischen der Radscheibe (3) und einer Fahrzeugnabe (5) eingesetzte wärmeisolierende Platte (8) aufweist, dadurch **gekennzeichnet**, daß im Bereich eines jeden Lochs (4) für das Befestigungselement (9) axial gleichmäßig angeordnete Stifte (6) aus Stahl mit hoher Elastizitätsgrenze eingesetzt sind, deren Stirnflächen in Berührung mit Stützplatten (7) stehen, die auf beiden Seiten der Radscheibe (3) angeordnet sind, wobei die lineare Wärmeausdehnungszahl der Stifte (6) und der Befestigungselemente (9) gleich groß ist.

Fig. 1

EPAC-36259.4

A-A

Fig. 2